# EUROPEAN PATENT APPLICATION

(11) **EP 1 592 156 A1**
(43) Date of publication of application: **02.11.2005**
(21) Application number: 04706316.9
(22) Date of filing: 29.01.2004
(51) Int. Cl.: H04J 1/06

(54) **RADIO COMMUNICATION DEVICE AND RADIO COMMUNICATION METHOD**

(30) Priority: 31.01.2003 JP 2003023761
(71) Applicant: Takahashi, Sachio, Morioka-shi, Iwate 020-1027 (JP); Fuda, Kazuo, Morioka-shi, Iwate 020-0026 (JP)
(72) Inventor: Takahashi, Sachio, Morioka-shi, Iwate 020-1027 (JP); Fuda, Kazuo, Morioka-shi, Iwate 020-0026 (JP)
(74) Representative: Bremi, Tobias Hans
(86) International application number: PCT/JP2004/000825
(87) International publication number: WO 2004/068755

(57) **Abstract**

A radio communication device includes: clock generation means (31A to 3ID, 30) for generating a plurality of clocks; data signal generation means (204, 203) for inputting transmission signals of a plurality of types to be transmitted and generating a plurality of data signals including the plurality of types of transmission signals correlated to the transmission channel for use among transmission channels defined based on the plurality of clocks; multiplexing means (201) for multiplexing the plurality of data signals to generate a transmission signal; and signal transmission means (11) for radio-transmitting the transmission signal. In consequence, it is possible to provide a radio communication device and method capable of further improving the transmission efficiency of information with a simple structure.

## Description

### Technical Field

The present invention relates to a radio communication device for use in a cellular phone communication system or the like, and more particularly, it relates to a radio communication device and a radio communication method for performing radio communication via multiple channels.

### Background Art

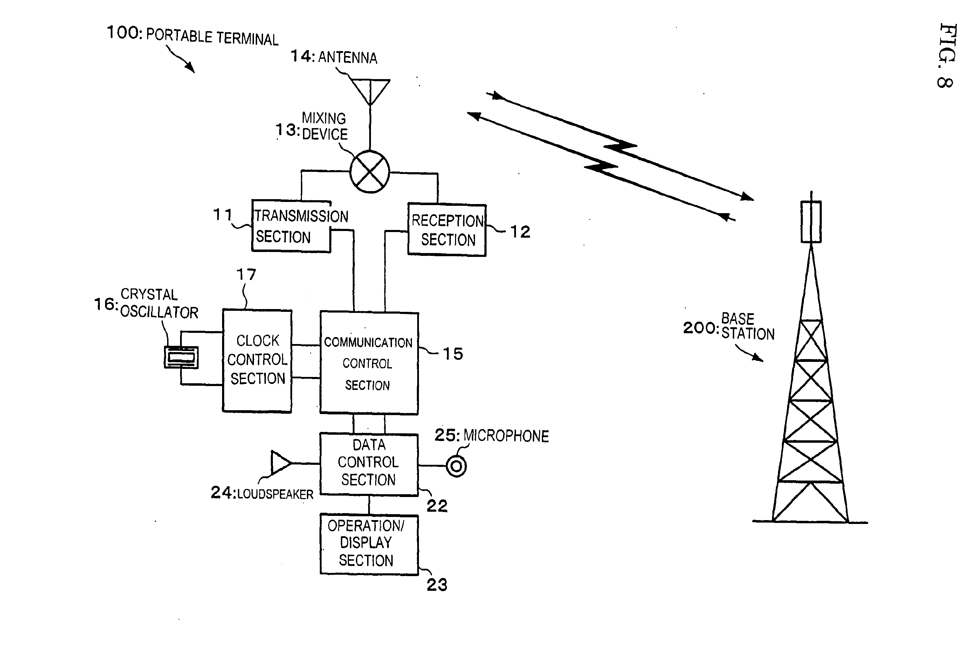

As shown in FIG. 8, a conventional cellular phone system comprises a portable terminal (cellular phone) 100, and a base station 200.

Here, the portable terminal 100 generally has a transmission section 11, a reception section 12, a mixing device 13, an antenna 14, a communication control section 15, a crystal oscillator 16, a clock control section 17, a data control section 22, an operation/display section 23, a loudspeaker 24, a microphone 25 and the like.

In such a portable terminal 100, for example, a voice signal corresponding to user's voice output from the microphone 25 is supplied to the data control section 22, and converted into voice data having a predetermined form. This voice data is converted into a transmission signal of a predetermined channel in the communication control section 15, and this transmission signal is supplied to the transmission section 11. The transmission section 11 modulates a carrier wave (e.g., 800 MHz band) of a frequency corresponding to the channel based on the transmission signal from the communication control section 15 to generate a transmission signal. Then, the transmission signal is radiated from the antenna 14 through the mixing device 13.

When the transmission signal radiated from the portable terminal 100 in this manner is received in the base station 200, demodulation is performed, and the transmission signal (voice signal) is separated from a carrier wave component of the frequency corresponding to the channel. Moreover, the transmission signal is sent from the base station 200 to a target terminal (portable terminal, fixed telephone set, or the like) via a predetermined communication network (mobile communication network, fixed telephone network, or the like).

On the other hand, on acquiring the signal (voice signal) from the target terminal via a predetermined communication network, the base station 200 modulates the carrier wave (band which is away from a frequency band utilized by the portable terminal by a predetermined frequency width) corresponding to the predetermined channel based on the signal to generate the transmission signal. Then, the transmission signal is radiated from the antenna of the base station 200.

The transmission signal thus radiated from the base station 200 is received by the antenna 14 of the portable terminal, and is supplied as a reception signal to the reception section 12 via the mixing device 13. The reception section 12 sends the reception signal to the communication control section 15. The communication control section 15 detects the channel used in the base station 200 from the reception signal, and separates the transmission signal (voice signal) from the carrier wave component of the frequency corresponding to the channel. The transmission signal is supplied to the data control section 22, and the data control section 22 generates the voice signal from the supplied transmission signal, and drives the loudspeaker 24 based on the voice signal. As a result, the loudspeaker 24 outputs a voice corresponding to the voice signal.

When processing is performed in accordance with the above-described procedure, voice communication is possible between the portable terminal and the terminal of the target.

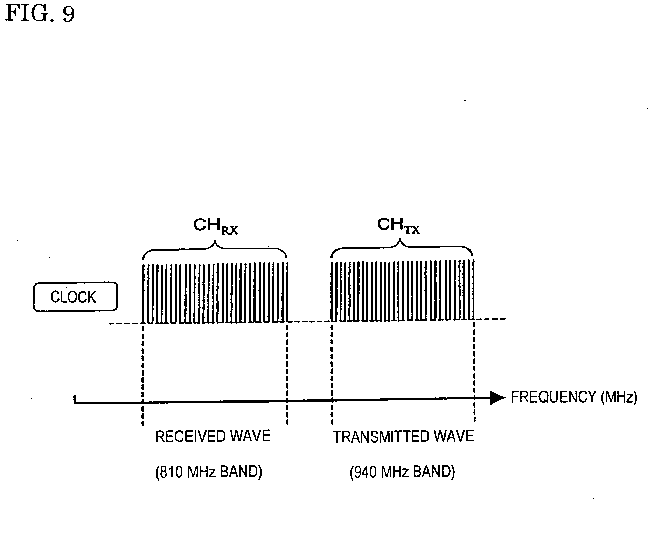

Furthermore, in the portable terminal 100, an output clock from the crystal oscillator 16 is supplied to the communication control section 15 via the clock control section 17, and the communication control section 15 sets, as a channel to be used, any of channels at predetermined frequency intervals defined based on the supplied clock. That is, as shown in FIG. 9, as to a received wave, a single reception channel to be actually used is set from reception channels CHRX at the predetermined frequency intervals from a top frequency (e.g., 800 MHz). As to a transmitted wave, a single transmission channel to be actually used is set from transmission channels CHTX at the predetermined frequency intervals from a frequency away from a last frequency of the received wave by the predetermined frequency width (e.g., 130 MHz).

Moreover, there is proposed a radio communication device which transmits/receives two data strings in the single channel (equal frequency). It is to be noted that this technique is described in Japanese Patent Application Laid-Open No. 11-136206 (Patent Document 1).

The conventional radio communication device phase-modulates a first input signal to generate a phase-modulated signal, amplitude-modulates a second input signal to generate an amplitude-modulated signal, and multiplies the phase-modulated signal by the amplitude-modulated signal. Then, a signal obtained by the multiplication is transmitted via the single channel. The radio communication device on a reception side synchronously detects the reception signal to thereby acquire a first output signal corresponding to the first input signal, and detects an envelope curve of the reception signal to thereby acquire a second output signal corresponding to the second input signal. According to such a conventional radio communication device, since two data strings are transmitted and received via the single channel, a transmission efficiency of information can be improved.

However, in this conventional radio communication device, only two types of data strings can be simultaneously transmitted and received, and there is a limitation on the improvement of the transmission efficiency of the information. Additionally in the conventional device, two types of modulation systems and corresponding two types of demodulation systems (detection systems) have to be employed, and its constitution has been comparatively complicated.

Furthermore, in recent years, it has been possible to transmit video between the radio communication devices. In a case where the video is transmitted and received, since a data amount is large and further the data needs to be compressed or uncompressed, a transmission speed has been very low. In addition, a considerable time has been required in displaying the video in a screen in the radio communication device. Therefore, it has been one problem in a communication field to enable the high-speed transmission of the video.

The present invention has been developed in view of such situations, and an object of the present invention is to provide a radio communication device and a radio communication method in which a transmission efficiency of information can be further improved with a simpler structure, and the high-speed communication of video is possible.

### Disclosure of the Invention

To solve this problem, the present invention has been developed.

A first aspect of the present invention is directed to a radio communication device comprising clock generation means for generating a plurality of clocks; data signal generation means for inputting a plurality of transmission signals to be transmitted, setting transmission channels for use among transmission channels defined based on the plurality of clocks, and generating a plurality of data signals including the transmission signals correlated to these set transmission channels; multiplexing means for multiplexing the plurality of data signals generated by the data signal generation means to generate a transmission signal; and signal transmission means for radio-transmitting the transmission signal obtained by the multiplexing means.

According to this constitution, a plurality of or a plurality of types of transmission signals can be multiplexed and transmitted using the plurality of set transmission channels among the transmission channels defined by the plurality of clocks. That is, the plurality of signals can be simultaneously sent. Therefore, a transmission efficiency of information can be further improved, and hence, high-speed communication can be realized by a comparatively simple structure.

Additionally, for example, a certain utilization mode can be realized such as a mode in which data communication of a complete moving image or the like can be simultaneously performed by a personal computer connected to a cellular phone while voice communication is done by the one cellular phone. It is also possible to increase subscriber cellular phones in a limited use frequency band, and the device is remarkably useful.

Furthermore, in the radio communication device according to the present invention, the clock generation means can be constituted so as to have a plurality of clock oscillators which individually generate the plurality of clocks.

A second aspect of the present invention is directed to the above radio communication device wherein the clock generation means generates, by use of a way such as frequency division, the plurality of clocks from clocks which are output from a single oscillator.

A third aspect of the present invention is directed to the above radio communication device which further comprises video accepting means for outputting a video signal based on a taken video; and video division means for dividing the video signal, wherein the data signal generation means inputs the divided video signals as video data, sets the transmission channels for use among the transmission channels defined based on the plurality of clocks, and generates the plurality of data signals including the video data correlated to these set transmission channels.

According to this constitution, it is possible to multiplex and transmit a plurality of video data after divided by use of the plurality of set transmission channels among the transmission channels defined by the plurality of clocks. In consequence, a plurality of video data can be transmitted simultaneously in parallel with one another, whereby the high-speed communication of the video is possible.

Additionally, since the high-speed communication of the video data can be realized by the multiplexing transmission, necessity for compressing or uncompressing decreases. Therefore, a time required in the compressing or uncompressing can be reduced, and accordingly the video can be transmitted at a higher speed.

A fourth aspect of the present invention is directed to a radio communication device comprising clock generation means for generating a plurality of clocks; signal reception means for receiving a radio-transmitted signal, and outputting a reception signal; signal separation means for separating a plurality of data signals from the reception signal; channel correlation means for correlating a reception channel for use among reception channels defined by the plurality of clocks to the plurality of data signals obtained by the signal separation means; and transmission signal extraction means for separating a transmission signal from the data signal correlated to the reception channel for use based on the plurality of clocks.

According to this constitution, the transmission signal corresponding to each reception channel can be extracted from the reception signal including a plurality of multiplexed reception channels.

A fifth aspect of the present invention is directed to the above radio communication device which has video generation means for generating video data from the transmission signal obtained by the transmission signal extraction means; and video combination means for combining a plurality of video data to obtain a video signal.

According to this constitution, the video data is generated from the extracted transmission signal, and the plurality of video data can be combined to obtain the video signal. Therefore, the multiplexed video data can be received by the radio communication device, and high-speed transmission of the video can be realized between the radio communication devices.

A sixth aspect of the present invention is directed to a radio communication device comprising clock generation means for generating a plurality of clocks; data signal generation means for inputting a plurality of transmission signals to be transmitted, setting transmission channels for use among transmission channels defined based on the plurality of clocks, and generating a plurality of data signals including the transmission signals correlated to these set transmission channels; multiplexing means for multiplexing the plurality of data signals generated by the data signal generation means to generate a transmission signal; signal transmission means for radio-transmitting the transmission signal obtained by the multiplexing means; signal reception means for receiving the radio-transmitted signal, and outputting a reception signal; signal separation means for separating the plurality of data signals from the reception signal; channel correlation means for correlating a reception channel for use among reception channels defined by the plurality of clocks to the plurality of data signals obtained by the signal separation means; and transmission signal extraction means for separating the transmission signal from the data signal correlated to the reception channel for use based on the plurality of clocks.

This constitution can realize the radio communication device which multiplexes and transmits a plurality of types of transmission signals by use of a plurality of set transmission channels among the transmission channels defined by the plurality of clocks and which extracts the transmission signal corresponding to each reception channel from the reception signal including the plurality of multiplexed reception channels.

A seventh aspect of the present invention is directed to the above radio communication device, further comprising video accepting means for taking a video to output a video signal, and video division means for dividing the video signal, wherein the data signal generation means inputs the divided video signals as video data, sets the transmission channels for use among the transmission channels defined based on the plurality of clocks, and generates the plurality of data signals including the video data correlated to these set transmission channels; and the radio communication device comprises video generation means for generating video data from the transmission signal obtained by the transmission signal extraction means; and video combination means for combining a plurality of video data to obtain the video signal.

This constitution can realize a radio communication device which multiplexes and transmits the plurality of video data after divided by use of the plurality of set transmission channels from the transmission channels defined by the plurality of clocks. In addition, the device extracts the transmission signal corresponding to each reception channel from the reception signal including the plurality of multiplexed reception channels, generates the video data from the transmission signal, and combines the plurality of video data to obtain the video signal. Therefore, multiplexing and transmission/reception of the video data are possible, and high-speed communication can be realized.

An eighth aspect of the present invention is directed to a radio communication method comprising the steps of setting transmission channels for use among transmission channels defined based on clocks generated by a plurality of clock generation means; generating a plurality of data signals including transmission signals correlated to the set transmission channels; multiplexing a plurality of data signals to generate a transmission signal; and radio-transmitting the transmission signal.

A ninth aspect of the present invention is directed to the above radio communication method, further comprising the steps of outputting a video signal based on a taken video; dividing the video signal; inputting the divided video signals as video data, and setting the transmission channels for use among the transmission channels defined based on the clocks generated by the plurality of clock generation means; and generating the plurality of data signals including the video data correlated to the set transmission channels.

A tenth aspect of the present invention is directed to a radio communication method comprising the steps of receiving a radio-transmitted signal to generate a reception signal; separating a plurality of data signals from the reception signal; correlating a reception channel for use among reception channels defined by a plurality of clocks to the plurality of data signals; and separating a transmission signal from the data signal correlated to the reception channel for use based on the plurality of clocks.

An eleventh aspect of the present invention is directed to the above radio communication method, further comprising the steps of generating video data from the transmission signal obtained by transmission signal extraction means; and combining a plurality of video data to obtain a video signal.

### Brief Description of the Drawings

FIG. 1 is a block diagram showing a constitution of a radio communication device according to a first embodiment of the present invention;
FIG. 2 is a block diagram showing a detailed constitution of the radio communication device shown in FIG. 1;
FIG. 3 is a diagram showing reception channels and transmission channels defined by four clocks;
FIG. 4 is a block diagram showing a constitution of a radio communication device according to a second embodiment of the present invention;
FIG. 5 is a block diagram showing a detailed constitution of the radio communication device shown in FIG. 4;
FIG. 6 is a diagram showing that video is divided, correlated to a channel for use among the channels defined by four clocks, and further combined;
FIG. 7 is a diagram showing a constitution which realizes video communication in a base station provided with a conversion unit;
FIG. 8 is a diagram showing one example of a communication system including a conventional radio communication device; and
FIG. 9 is a diagram showing reception channels and transmission channels defined by clocks used in the radio communication device shown in FIG. 8.

### Best Mode for Carrying out the Invention

A mode for carrying out the present invention will be described hereinafter with reference to the drawings.

### [First Embodiment]

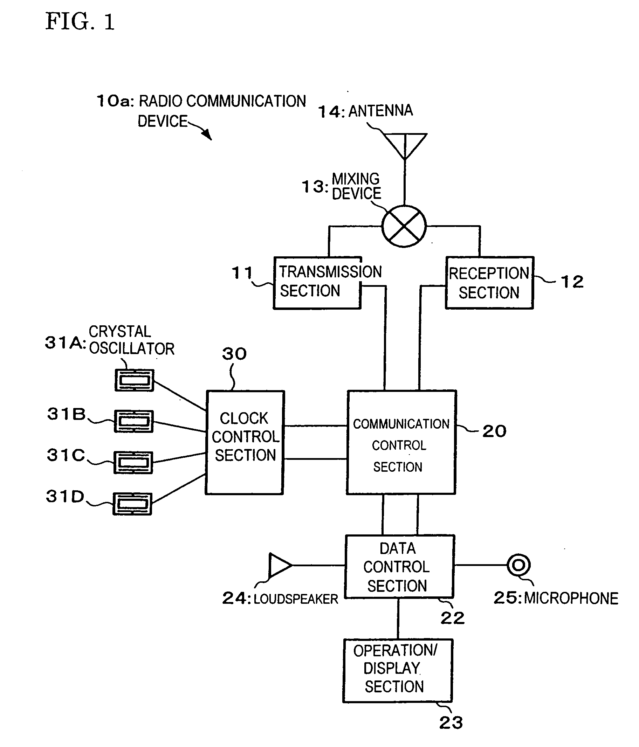

According to a first embodiment of the present invention, a radio communication device is constituted as shown in FIG. 1. For example, the radio communication device is constituted as a cellular phone terminal.

In FIG. 1, a radio communication device 10a has a transmission section 11, a reception section 12, a mixing device 13, an antenna 14, a communication control section 20, a data control section 22, an operation/display section 23, a loudspeaker 24, a microphone 25, a clock control section 30, and four crystal oscillators 31A, 31B, 31C, 31D.

Here, each of the four crystal oscillators 31A, 31B, 31C, and 31D generates its own clock, and supplies the clock to the clock control section 30.

The clock control section 30 supplies to the communication control section 20 four reference clocks of a clock A (corresponding to the clock from the crystal oscillator 31A), a clock B (corresponding to the clock from the crystal oscillator 31B), a clock C (corresponding to the clock from the crystal oscillator 31C), and a clock D (corresponding to the clock from the crystal oscillator 31D) at predetermined timings.

It is to be noted that in the present embodiment, the four crystal oscillators 31A, 31B, 31C, and 31D, and the clock control section 30 are generically referred to as "clock generation means".

The transmission section (signal transmission means) 11 subjects a multiplexed transmission signal from the communication control section 20 to a predetermined modulation process, and transmits the multiplexed transmission signal after the modulation process. The multiplexed signal subjected to the modulation processing is radiated from the antenna 14 through the mixing device 13.

The reception section (signal reception means) 12 sends a reception signal from the mixing device 13 to the communication control section 20. As to the reception signal, the transmission signal radiated from the base station 200 (see FIG. 8) is received by the antenna 14, and is supplied to the reception section 12 via the mixing device 13.

The data control section 22 supplies to the communication control section 20 a voice signal corresponding to user's voice from the microphone 25, or a data signal (representing, e.g., images, characters, etc.) supplied from the outside via a data input/output multiconnector 22a.

Moreover, the data control section 22 performs processing with respect to a transmission signal supplied from the communication control section 20. For example, when the transmission signal supplied from the communication control section 20 is concerned with a voice, the transmission signal is converted into a voice signal, and the voice signal is supplied to the loudspeaker 24. When the transmission signal relates to data (representing, e.g., images, characters, etc.), the transmission signal is converted into a data signal, or supplied as the transmission signal to the operation/display section 23 or the outside without being processed.

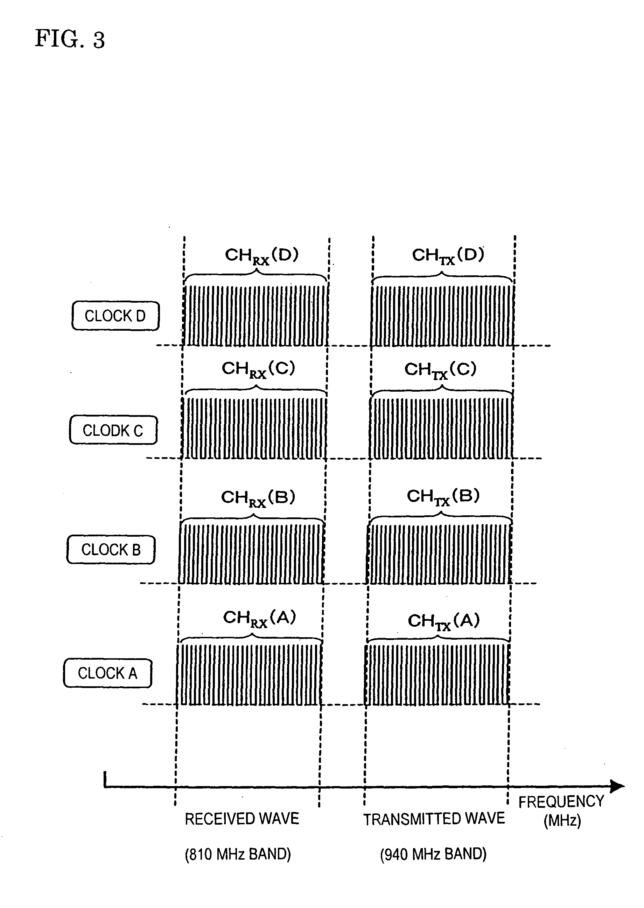

The communication control section 20 sets as a channel to be used any of channels having predetermined frequencies (e.g., 15 KHz to 25 KHz), defined based on the four clocks of the respective clocks A, B, C, D from the clock control section 30. That is, as shown in FIG. 3, as to a received wave (e.g., 810 MHz band), a reception channel CHRX (An) to be actually used is set from reception channels CHRX (A) defined by the clock A, a reception channel CHRX (Bn) to be actually used is set from reception channels CHRX (B) defined by the clock B, a reception channel CHRX (Cn) to be actually used is set from reception channels CHRX (C) defined by the clock C, and a reception channel CHRX (Dn) to be actually used is set from reception channels CHRX (D) defined by the clock D. As to a transmitted wave (e.g., 940 MHz band), a transmission channel CHTX(An) to be actually used is set from transmission channels CHTX(A) defined by the clock A, a transmission channel CHTX(Bn) to be actually used is set from transmission channels CHTX(B) defined by the clock B, a transmission channel CHTX(Cn) to be actually used is set from transmission channels CHTX(C) defined by the clock C, and a transmission channel CHTX(Dn) to be actually used is set from transmission channels CHTX(D) defined by the clock D.

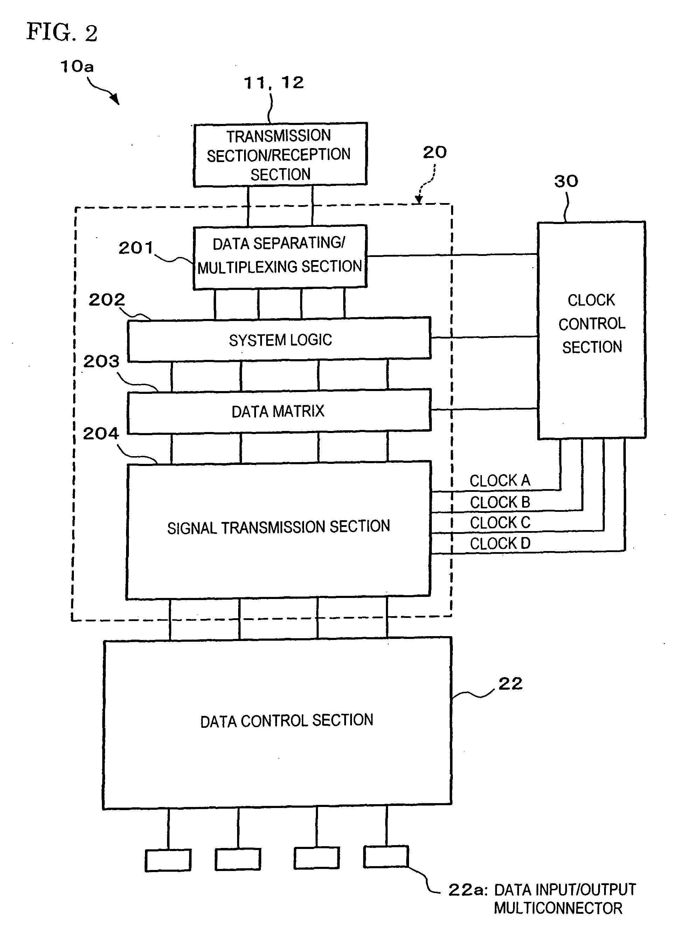

For example, as shown in FIG. 2, this communication control section 20 has a data separating/multiplexing section 201, a system logic 202, a data matrix 203, and a signal transmission section 204.

The data separating/multiplexing section (signal separation means) 201 separates four data signals from a reception signal from the reception section 12.

The system logic 202 corrects a distortion of each of the four data signals from the data separating/multiplexing section 201 to supply the signal to the data matrix 203.

The data matrix (channel correlation means) 203 correlates each of the four data signals to the reception channels CHRX(An), CHRX (Bn), CHRX (Cn), CHRX (Dn) for use among the reception channels CHRX (A), CHRX (B), CHRX (C), CHRX (D) defined by the respective clocks A, B, C, and D (setting of the reception channels).

The signal transmission section (transmission signal extraction means) 204 separates the transmission signal (e.g., voice signal, etc.) from the data signal correlated to each of the reception channels CHRX(An), CHRX(Bn), CHRX(Cn), CHRX(Dn) based on the clocks A, B, C, and D from the clock control section 30, and supplies the transmission signal to the data control section 22.

Moreover, the signal transmission section 204 inputs each transmission signal (e.g., voice signal, etc.) to be transmitted from the data control section 22, and generates a data signal including four transmission signals based on the clocks A, B, C, and D from the clock control section 30.

The data matrix 203 correlates each of the data signals from the signal transmission section 204 to the transmission channels CHTX(An), CHTX(Bn), CHTX(Cn), CHTX(Dn) for use among the transmission channels CHTX(A), CHTX(B), CHTX(C), CHTX(D) defined by the respective clocks A, B, C, and D (setting of the transmission channels).

The system logic 202 performs processing such as waveform adjustment with respect to the respective data signals correlated to the transmission channels CHTX(An), CHTX(Bn), CHTX(Cn), CHTX(Dn) by the data matrix 203, and supplies the respective data signals to the data separating/multiplexing section 201.

The data separating/multiplexing section (multiplexing means) 201 multiplexes the respective supplied data signals to generate a transmission signal, and supplies the transmission signal to the transmission section 11. Therefore, the transmission signal generated in the data separating/multiplexing section 201 is obtained by combining four (or mixing four) data signals correlated to the transmission channels CHTX(An), CHTX(Bn), CHTX(Cn), CHTX(Dn) by the data matrix 203.

In this data separating/multiplexing section 201, the number of gates is plused (increased) than before. In a conventional portable terminal 100, only one crystal oscillator 16 was disposed, and only A band was used. On the other hand, in the radio communication device 10 of the present invention, a plurality of (four in the present embodiment) crystal oscillators 31 are disposed, and a plurality of bands (A to D bands (four systems) in the present embodiment) are used.

It is to be noted that each of the gates disposed in the data separating/multiplexing section 201 can be realized by use of the gate described, for example, in Japanese Patent Application Laid-Open No. 11-317775 "Device for transmitting combined Data/Clock Signal".

The transmission section 11 transmits the transmission signal supplied from the data separating/multiplexing section 201.

In this radio communication device (e.g., cellular phone, etc.), a voice signal, image data, and text data can be simultaneously transmitted/received using the channel (transmission or reception channel) for use set from the channels (transmission or reception channels) defined by each of four clocks A, B, C, and D. Since the channels defined by four clocks are utilized, more information can be simultaneously transmitted/received as compared with a conventional radio communication device which transmits a signal via a channel set among channels defined by a single clock. Furthermore, in a communication system utilizing this radio communication device, the number of interruptible channels increases even in a case where communication is congested, such as a time of disaster. Therefore, a resistance to congestion is also improved. The number of communication circuits can be increased without expanding the existing radio wave band.

It is to be noted that in the above-described example, four clocks are used, but the number of the clocks is not especially limited as long as the number of the clocks for defining the channels is two or more.

Moreover, in the present embodiment, the data matrix 203 and the signal transmission section 204 perform processing of "inputting a plurality of transmission signals to be transmitted, setting transmission channels for use among transmission channels defined based on the respective clocks, and generating a plurality of data signals including the respective transmission signals correlated to these set transmission channels". Therefore, the data matrix 203 and the signal transmission section 204 are generically referred to as "data signal generation means".

### [Second Embodiment]

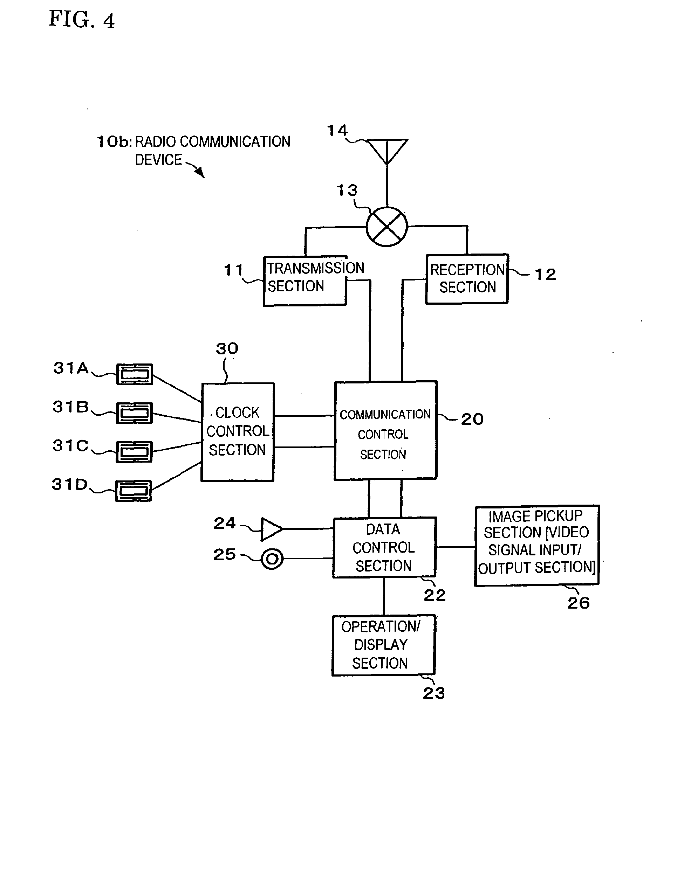

Next, a second embodiment of a radio communication device and a radio communication method of the present invention will be described with reference to FIG. 4.

FIG. 4 is a block diagram showing a constitution of the radio communication device of the present embodiment.

The present embodiment is different from the first embodiment in that, in addition to a voice signal and the like, a video signal can be divided/multiplexed and transmitted/received. That is, in the first embodiment, the voice signal and the like are mainly objects of multiplexing communication. On the other hand, the present embodiment is different in that a plurality of types of signals including the video signal are objects of the multiplexing communication. The video signal can be divided into the predetermined number of signals, and a plurality of video data after divided are correlated to channels for use among channels defined based on a plurality of clocks, and can be transmitted/received. Other constituting elements are similar to those of the first embodiment.

Therefore, in FIG. 4, constituting components similar to those of FIG. 1 are denoted with the same reference numerals, and detailed description is omitted.

As shown in FIG. 4, a radio communication device 10b has a transmission section 11, a reception section 12. a mixing device 13, an antenna 14, a communication control section 20, a data control section 22, an operation/display section 23, a loudspeaker 24, a microphone 25, an image pickup section 26, a clock control section 30, and four crystal oscillators 31A, 31B, 31C, 31D.

Here, the image pickup section (video signal input/output section) 26 is means for photographing video, and, for example, a CCD camera or the like is usable. The video taken in by the image pickup section 26 is sent as the video signal to the data control section 22. It is to be noted that the image pickup section 26 can receive the video signal from another device (device having a function of photographing, processing, and editing the video).

The data control section 22 supplies to the communication control section 20 a voice signal corresponding to user's voice from the microphone 25, a data signal (representing, e.g., images, characters, etc.) supplied from the outside (supply path is not shown), and the video signal from the image pickup section 26. The data control section 22 performs processing with respect to a transmission signal supplied from the communication control section 20. For example, when the transmission signal supplied from the communication control section 20 relates to the video, the transmission signal is converted and generated into the video signal. Alternatively, the signal is supplied as the transmission or video signal to the operation/display section 23 or the outside (via a data input/output multiconnector 22a or the like).

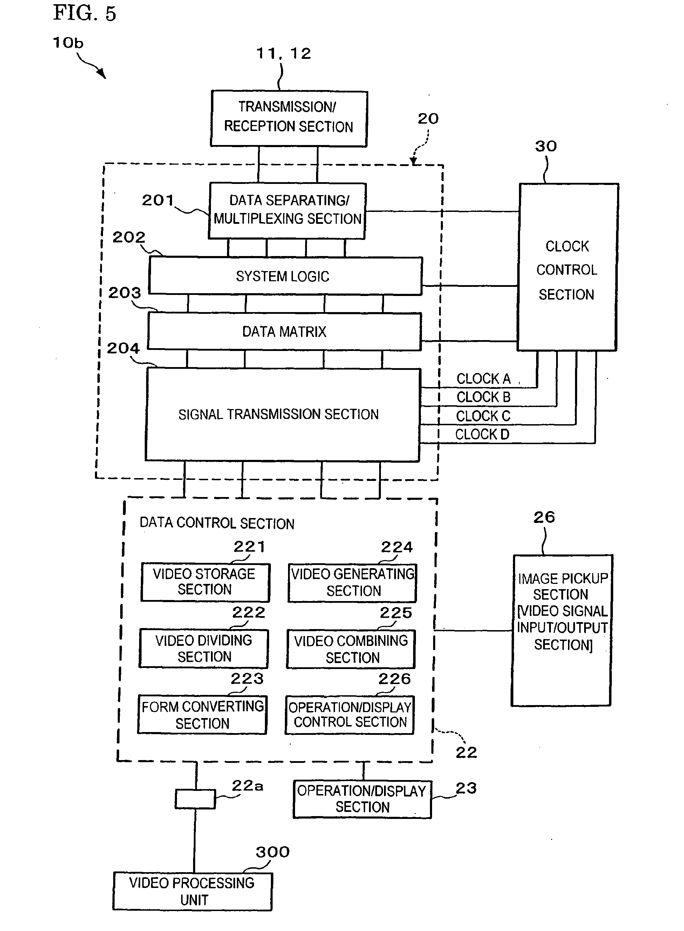

The data input/output multiconnector 22a is an interface for exchanging the video signal with the outside, and can be connected to a video processing unit 300 as shown in FIG. 5. For example, a universal serial bus (USB) or the like can be used in this connection.

The video processing unit 300 is a unit having one or more of functions concerning the video (e.g., functions such as photographing, recording, processing (editing, dividing, combining, etc.), display, external input/output (transmission/reception)). Example of the unit include a personal computer, a digital camera, a digital video, a disc player/recorder (CD, MD, DVD, etc.), a video cassette recorder, a cellular phone, a PHS, a PDA and the like. The video signal is transmitted/received between the video processing unit 300 and the data control section 22.

It is to be noted that in FIG. 5, the image pickup section 26 and the video processing unit 300 are individually shown, and the data control section 22 can receive the video signal from one or both of the image pickup section 26 and the video processing unit 300.

Moreover, in the present embodiment, since the image pickup section 26 outputs the video signal based on the taken video, the section has a function of "video accepting means". Additionally, since the data input/output multiconnector 22a also takes in the video from an external unit (video processing unit 300) to output the video signal, the multiconnector can be included in the "video accepting means".

Furthermore, as shown in FIG. 5, the data control section 22 has a video storage section 221, a video dividing section 222, a form converting section 223, a video generating section 224, a video combining section 225, and an operation/display control section 226.

The video storage section 221 stores: the video signal sent from the image pickup section 26 or the video processing unit 300; the video signal (video data) divided in the video dividing section 222; the transmission signal (video signal) sent from a signal transmission section 204 of the communication control section 20; the video data generated in the video generating section 224; the video signal combined in the video combining section 223 and the like. Additionally, a voice signal, text data and the like can be stored,

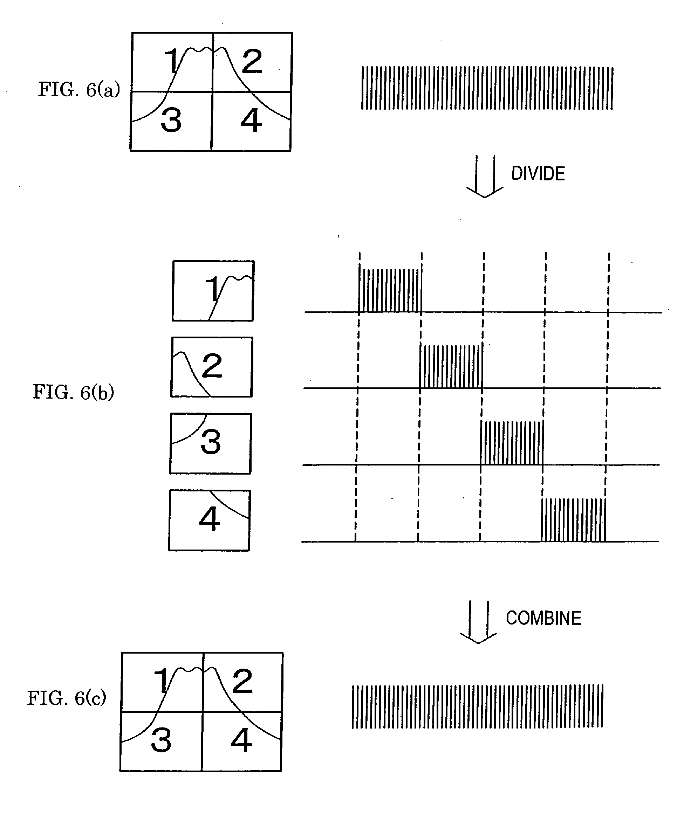

The video dividing section (video division means) 222 divides the video signal (or the video signal taken out of the video storage section 221) sent from the image pickup section 26 or the video processing unit 300 (FIG. 6(a)). As a technique for dividing the video signal, it is possible to use an arbitrary and preferable technique which has heretofore been known. The number of divisions is not especially limited, and an arbitrary number may be set. Additionally, the divisions can be set to be as many as or less than clocks generated from clock generation means (clock control section 30 and crystal oscillators 31A to 31D). Each (video data) of the video signals divided in the video dividing section 222 can be sent and stored in the video storage section 221.

The form converting section 223 converts the video data after divided into a predetermined form. This converted video data is sent to the signal transmission section 204 of the communication control section 20.

The video generating section (video generation means) 224 generates the video data from the transmission signal sent from the signal transmission section 204.

The video combining section (video combination means) 225 combines a plurality of video data generated in the video generating section 224 (FIG. 6(c)). The combined video data (video signal) is sent and stored in the video storage section 221. It is to be noted that as a technique for combining the video data, an arbitrary and preferable technique which has heretofore been known can be used.

The operation/display control section 224 takes the video signal from the video storage section 221, and sends the signal to the operation/display section 23 to display the signal in a screen.

As shown in FIG. 5, the communication control section 20 has a data separating/multiplexing section 201, a system logic 202, a data matrix 203, and the signal transmission section 204.

The signal transmission section 204 inputs the vide data to be transmitted from the data control section 22, and generates a data signal including four transmission signals based on clocks A, B, C, and D from the clock control section 30 (FIG. 6(b)). The generated data signal is sent to the data matrix 203.

Moreover, the signal transmission section 204 separates the transmission signal (video data) from the data signal correlated to each of reception channels CHRX(An), CHRX(Bn), CHRX(Cn), CHRX(Dn) based on the clocks A, B, C, and D from the clock control section 30, and supplies the transmission signal to the data control section 22.

It is to be noted that since the data separating/multiplexing section 201, the system logic 202, and the data matrix 203 execute operations and processes similar to those of the data separating/multiplexing section 201, the system logic 202, and the data matrix 203 in the first embodiment, the description is omitted here.

When the radio communication device is constituted in this manner, the video signal is divided, and the video data after divided can be simultaneously transmitted/received using the channel (transmission, reception channel) for use set from the channels (transmission, reception channels) defined by the four clocks A, B, C, D. By use of the channels defined by the four clocks, more information can be simultaneously transmitted/received as compared with a conventional radio communication device which transmits a signal via a channel set from the channels defined by a single clock. Therefore, since multiplexing communication is possible also with respect to the video, the high-speed communication of the video can be realized.

Furthermore, in a communication system utilizing this radio communication device, the number of interruptible channels increases even in a case where communication is congested, such as a time of disaster. Therefore, a resistance to congestion is also improved. The number of communication circuits can be increased without expanding the existing radio wave band.

It is to be noted that in the present embodiment, the video signal is divided and multiplexed to make possible transmission/reception in the radio communication device. For example, in a case where four crystal oscillators 31 are disposed, A and B bands are used for transmission/reception of the video, C band is used for transmission/reception of a voice, and D band is used for packet communication. Thus, different types of signals can be transmitted/received via the respective bands.

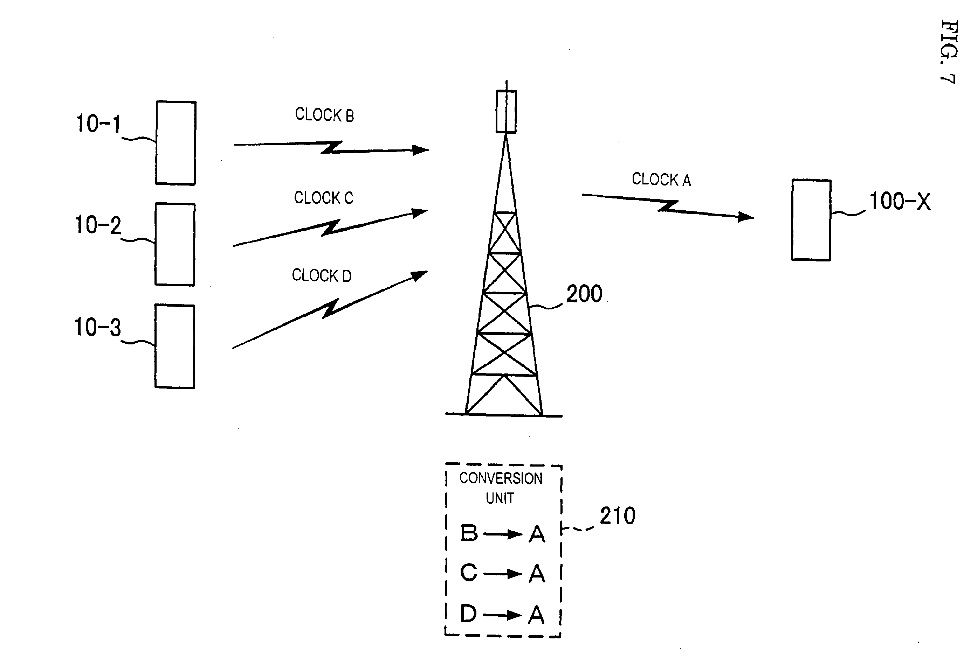

Additionally, in a case where the radio communication device of the present invention is disposed on a transmission side of the video, and a conventional portable terminal is disposed on a reception side, the reception side can only receive the transmission signal including the transmission signal correlated to the transmission channel for use among the transmission channels defined based on the same clock as that owned by itself (e.g., clock A). Specifically, for example, as shown in FIG. 7, when the reception side (portable terminal 10-X) has a clock A, the transmission side (radio communication devices 10-1, 10-2, 10-3) transmits a transmission signal including a plurality of transmission signals correlated to a transmission channel for use among transmission channels defined based on the respective clocks B, C, D. In this case, the reception side cannot receive the transmitted transmission signals.

When the radio communication device of the present invention is used together with the conventional portable terminal in this manner, as shown in FIG. 7, a base station 200 can be provided with a conversion unit 210 for converting the transmitted signal into the clock the conventional portable terminal has.

More specifically, for example, a signal (voice signal or data signal (excluding a moving image)) which has overflowed from an A data channel is transmitted via a B data channel. In this case, in the base station 200, B channel is mixed with A clock, and the clock is changed to A data + A clock.

In this constitution, even when the transmission signal from the transmission side includes a plurality of transmission signals correlated to the transmission channel for use among the transmission channels defined based on each of the clocks B, C, D, the reception side can receive the transmission signal.

### Industrial Applicability

Since the present invention is a technique for enhancing a transmission efficiency of data communication, and realizing high-speed communication, the present invention can be utilized in a communication field.

## Claims

1. A radio communication device comprising:
clock generation means for generating a plurality of clocks;
data signal generation means for inputting a plurality of transmission signals to be transmitted, setting transmission channels for use among transmission channels defined based on the plurality of clocks, and generating a plurality of data signals including the transmission signals correlated to these set transmission channels;
multiplexing means for multiplexing the plurality of data signals generated by the data signal generation means to generate a transmission signal; and
signal transmission means for radio-transmitting the transmission signal obtained by the multiplexing means.

2. The radio communication device according to claim 1, wherein the clock generation means has a plurality of clock oscillators which individually generate the plurality of clocks.

3. The radio communication device according to claim 2, further comprising:
video accepting means for outputting a video signal based on a taken video; and
video division means for dividing the video signal,
wherein the data signal generation means inputs the divided video signals as video data, sets the transmission channels for use among the transmission channels defined based on the plurality of clocks, and generates the plurality of data signals including the video data correlated to these set transmission channels.

4. A radio communication device comprising:
clock generation means for generating a plurality of clocks;
signal reception means for receiving a radio-transmitted signal, and outputting a reception signal;
signal separation means for separating a plurality of data signals from the reception signal;
channel correlation means for correlating a reception channel for use among reception channels defined by the plurality of clocks to the plurality of data signals obtained by the signal separation means; and
transmission signal extraction means for separating a transmission signal from the data signal correlated to the reception channel for use based on the plurality of clocks.

5. The radio communication device according to claim 4, further comprising:
video generation means for generating video data from the transmission signal obtained by the transmission signal extraction means; and
video combination means for combining a plurality of video data to obtain a video signal.

6. A radio communication device comprising:
clock generation means for generating a plurality of clocks;
data signal generation means for inputting a plurality of transmission signals to be transmitted, setting transmission channels for use among transmission channels defined based on the plurality of clocks, and generating a plurality of data signals including the transmission signals correlated to these set transmission channels;
multiplexing means for multiplexing the plurality of data signals generated by the data signal generation means to generate a transmission signal;
signal transmission means for radio-transmitting the transmission signal obtained by the multiplexing means;
signal reception means for receiving the radio-transmitted signal, and outputting a reception signal;
signal separation means for separating the plurality of data signals from the reception signal;
channel correlation means for correlating a reception channel for use among reception channels defined by the plurality of clocks to the plurality of data signals obtained by the signal separation means; and
transmission signal extraction means for separating the transmission signal from the data signal correlated to the reception channel for use based on the plurality of clocks.

7. The radio communication device according to claim 6, further comprising:
video accepting means for taking a video to output a video signal; and
video division means for dividing the video signal,
wherein the data signal generation means inputs the divided video signals as video data, sets the transmission channels for use among the transmission channels defined based on the plurality of clocks, and generates the plurality of data signals including the video data correlated to these set transmission channels; and
the radio communication device comprises:
video generation means for generating video data from the transmission signal obtained by the transmission signal extraction means; and
video combination means for combining a plurality of video data to obtain the video signal.

8. A radio communication method comprising the steps of:
setting transmission channels for use among transmission channels defined based on clocks generated by a plurality of clock generation means;
generating a plurality of data signals including transmission signals correlated to the set transmission channels;
multiplexing a plurality of data signals to generate a transmission signal; and
radio-transmitting the transmission signal.

9. The radio communication method according to claim 8, further comprising the steps of:
outputting a video signal based on a taken video;
dividing the video signal;
inputting the divided video signals as video data, and setting the transmission channels for use among the transmission channels defined based on the clocks generated by the plurality of clock generation means; and
generating the plurality of data signals including the video data correlated to the set transmission channels.

10. A radio communication method comprising the steps of:
receiving a radio-transmitted signal to generate a reception signal;
separating a plurality of data signals from the reception signal;
correlating a reception channel for use among reception channels defined by a plurality of clocks to the plurality of data signals; and
separating a transmission signal from the data signal correlated to the reception channel for use based on the plurality of clocks.

11. The radio communication method according to claim 10, further comprising the steps of:
generating video data from the transmission signal obtained by transmission signal extraction means; and
combining a plurality of video data to obtain a video signal.

## Amended claims

### Amended claims under Art. 19.1 PCT

**1.** (Amended) A radio communication device comprising:
clock generation means for generating a plurality of clocks;
data signal generation means for inputting a plurality of transmission signals to be transmitted, setting transmission channels for use among transmission channels defined based on the plurality of clocks, and generating a plurality of data signals including the transmission signals correlated to these set transmission channels;
multiplexing means for multiplexing the plurality of data signals generated by the data signal generation means to generate a transmission signal; and
signal transmission means for modulating the transmission signal multiplexed by the multiplexing means, and radio-transmitting the modulated signal.

**2.** The radio communication device according to claim 1, wherein the clock generation means has a plurality of clock oscillators which individually generate the plurality of clocks.

**3.** The radio communication device according to claim 2, further comprising:
video accepting means for outputting a video signal based on a taken video; and
video division means for dividing the video signal,
wherein the data signal generation means inputs the divided video signals as video data, sets the transmission channels for use among the transmission channels defined based on the plurality of clocks, and generates the plurality of data signals including the video data correlated to these set transmission channels.

**4.** (Amended) The radio communication device according to claim 1, comprising:
clock generation means for generating a plurality of clocks;
signal reception means for receiving a radio-transmitted signal, and outputting a reception signal;
signal separation means for separating a plurality of data signals from the reception signal;
channel correlation means for correlating a reception channel for use among reception channels defined by the plurality of clocks to the plurality of data signals obtained by the signal separation means; and
transmission signal extraction means for separating a transmission signal from the data signal correlated to the reception channel for use based on the plurality of clocks.

**5.** The radio communication device according to claim 4, further comprising:
video generation means for generating video data from the transmission signal obtained by the transmission signal extraction means; and
video combination means for combining a plurality of video data to obtain a video signal.

**6.** (Amended) A radio communication device comprising:
clock generation means for generating a plurality of clocks;
data signal generation means for inputting a plurality of transmission signals to be transmitted, setting transmission channels for use among transmission channels defined based on the plurality of clocks, and generating a plurality of data signals including the transmission signals correlated to these set transmission channels;
multiplexing means for multiplexing the plurality of data signals generated by the data signal generation means to generate a transmission signal;
signal transmission means for modulating the transmission signal multiplexed by the multiplexing means, and radio-transmitting the modulated signal;
signal reception means for receiving the radio-transmitted signal, and outputting a reception signal;
signal separation means for separating the plurality of data signals from the reception signal;
channel correlation means for correlating a reception channel for use among reception channels defined by the plurality of clocks to the plurality of data signals obtained by the signal separation means; and
transmission signal extraction means for separating the transmission signal from the data signal correlated to the reception channel for use based on the plurality of clocks.

**7.** The radio communication device according to claim 6, further comprising:
video accepting means for taking a video to output a video signal; and
video division means for dividing the video signal,
wherein the data signal generation means inputs the divided video signals as video data, sets the transmission channels for use among the transmission channels defined based on the plurality of clocks, and generates the plurality of data signals including the video data correlated to these set transmission channels; and
the radio communication device comprises:
video generation means for generating video data from the transmission signal obtained by the transmission signal extraction means; and
video combination means for combining a plurality of video data to obtain the video signal.

**8.** (Amended) A radio communication method comprising the steps of:
setting transmission channels for use among transmission channels defined based on clocks generated by a plurality of clock generation means;
generating a plurality of data signals including transmission signals correlated to the set transmission channels;
multiplexing a plurality of data signals to generate a transmission signal; and
modulating the multiplexed transmission signal and radio-transmitting the modulated signal.

**9.** The radio communication method according to claim 8, further comprising the steps of:
outputting a video signal based on a taken video;
dividing the video signal;
inputting the divided video signals as video data, and setting the transmission channels for use among the transmission channels defined based on the clocks generated by the plurality of clock generation means; and
generating the plurality of data signals including the video data correlated to the set transmission channels.

**10.** (Amended) The radio communication method according to claim 8, comprising the steps of:
receiving a radio-transmitted signal to generate a reception signal;
separating a plurality of data signals from the reception signal;
correlating a reception channel for use among reception channels defined by a plurality of clocks to the plurality of data signals; and
separating a transmission signal from the data signal correlated to the reception channel for use based on the plurality of clocks.

**11.** The radio communication method according to claim 10, further comprising the steps of:
generating video data from the transmission signal obtained by transmission signal extraction means; and
combining a plurality of video data to obtain a video signal.

Statement under Art. 19.1 PCT
Claim 1 clarifies that a plurality of channel signals are multiplexed by multiplexing means, and the thus multiplexed signals (transmission signals) are subjected to modulation processing.

Cited literatures all employ a frequency division multiplex (FDM). The FDM modulates the respective channel signals at different frequencies, and multiplexes the modulated channel signals. Furthermore, a clock for use in the FDM generally defines a reference wave.

On the contrary, in the present invention, a plurality of transmission channels at predetermined frequency intervals are set on the basis of each of a plurality.of clocks. In other words, in the present invention, the plurality of clocks define kinds of data. Furthermore, in the present invention, the plurality of channel signals are multiplexed, and the thus multiplexed signals are subjected to the modulation processing. That is, the modulation processing in the present invention is carried out not for each of the channel signals but for transmission signals after the modulation processing. Therefore, the present invention exerts an effect that the transmission efficiency of information can further be improved with a simpler structure.

It is clarified that claim 4 depends on claim 1.

Claims 6 and 8 clarify that a plurality of channel signals to be transmitted are multiplexed by multiplexing means, and the thus multiplexed signals are subjected to modulation processing.

It is clarified that claim 10 depends on claim 8.
